# FASCICULE DE BREVET EUROPEEN

(11) **EP 2 185 047 B1**
(45) Date de publication et mention de la délivrance du brevet: **30.11.2016**
(21) Numéro de dépôt: 08787345.1
(22) Date de dépôt: 20.08.2008
(51) Int. Cl.: A47J 31/58, A47J 31/36

(54) **CIRCUIT HYDRAULIQUE POUR MACHINE DE PRODUCTION DE BOISSONS PAR INFUSION**
HYDRAULIKKREISLAUF FÜR EINE MASCHINE ZUR ZUBEREITUNG VON GETRÄNKEN DURCH AUFGUSS
HYDRAULIC CIRCUIT FOR A MACHINE FOR PRODUCING BEVERAGES BY INFUSION

(30) Priorité: 24.08.2007 FR 0757165
(43) Date de publication de la demande: 19.05.2010
(73) Titulaire: COMPAGNIE MEDITERRANEENNE DES CAFES S.A., 06510 Carros (FR)
(72) Inventeur: BLANC, Jean-Pierre, F-06000 Nice (FR)
(74) Mandataire: Hautier, Nicolas
(86) Numéro de dépôt international: PCT/EP2008/060895
(87) Numéro de publication internationale: WO 2009/027288

(56) Documents cités:
- US-A- 5 498 757
- US-A1- 2004 000 237

## Description

"Circuit hydraulique pour machine de production de boissons par infusion" La présente invention concerne un circuit hydraulique pour machine de préparation de boissons.

Un circuit de ce type est décrit dans US2004/0000237 A1.

Elle trouve plus particulièrement son application dans le domaine des machines pour préparation de boissons opérant une infusion d'un produit sous pression d'un fluide. Tel est le cas des machines à café de type EXPRESSO. Elle pourra également s'appliquer à la production de boissons à partir d'autres matières telles que le thé ou le cacao et nécessitant une mise sous pression d'un fluide.

Par souci de clarté, on désigne dans la présente demande par machine, l'ensemble des machines pour préparation de boissons effectuant une infusion d'un produit sous pression d'un fluide.

De manière connue, ce type de machine comporte un circuit hydraulique incorporant une chaudière permettant de chauffer l'eau destinée à permettre l'infusion d'un produit tel que le café, un réservoir d'eau et une chambre d'infusion destinée à accueillir ledit produit et à permettre son infusion par l'eau.

Ainsi, l'eau est stockée dans le réservoir avant de subir une montée en température dans la chaudière préalablement à son injection dans la chambre d'infusion.

Par ailleurs, afin d'assurer une infusion sous pression, ce type de machine est équipé d'une pompe permettant d'alimenter la chambre d'infusion avec de l'eau sous pression.

Cette pompe est disposée entre le réservoir et chaudière.

Pour les machines à café du type EXPRESSO, l'infusion du café est effectué à une pression d'environ 8 à 12 bars. Pour obtenir ce niveau de pression dans la chambre d'infusion, il convient que la pompe délivre une pression suffisamment importante pour compenser les pertes de charges, ces dernières étant particulièrement importantes lors de la traversée de la chaudière. Ainsi, la pompe doit généralement délivrer une pression de l'ordre de 16 bars.

Lors de la réalisation de la boisson l'ensemble du circuit hydraulique compris entre la pompe et la chambre à infuser est donc portée à une pression importante.

Lorsque la machine a terminé l'infusion du café, il y a nécessité de faire revenir l'ensemble du circuit hydraulique à une pression proche de la pression atmosphérique afin de pouvoir ouvrir la chambre d'infusion et retirer le produit infusé. Dans le cas d'une machine destinée à accueillir du produit conditionné sous forme de dosette, cette opération consiste à évacuer la dosette hors de la chambre d'infusion.

A défaut de cette dépressurisation préalable, l'ouverture de la chambre d'infusion provoque une projection brutale d'eau et, de produit infusé tel que le marc de café. Une telle ouverture s'accompagne également souvent de projection de vapeur d'eau. Ces projections représentent un danger inacceptable pour l'utilisateur. Il est donc impératif de dépressuriser le circuit hydraulique d'une machine à café après l'infusion du produit.

Pour assurer la dépressurisation du circuit hydraulique une solution largement employée consiste faire séjourner l'eau chaude et la vapeur d'eau rejetées lors de la dépressurisation dans un condenseur. L'eau refroidie issue du condenseur est alors recueillie dans un récipient dénommé « bassinelle ».

Cette solution présente de nombreux inconvénients. En effet, l'utilisateur est contraint de veiller à vider la bassinelle pour éviter les débordements de l'eau recueillie. Par ailleurs, l'eau accumulée dans la bassinelle stagne ce qui entraîne de nombreux désagréments tels que l'apparition de mauvaises odeurs, d'une coloration par développement d'algues, etc.

En outre, certaines machines génèrent une importante quantité d'eau rejetée ce qui oblige à vider la bassinelle très fréquemment. De plus, si la température de l'eau issue du condensateur demeure élevée, la bassinelle peut subir une élévation substantielle de température ce qui empêche toute manipulation de la bassinelle.

Il a été proposé une autre solution consistant à rejeter le volume d'eau en excès dans le réservoir d'eau froide. Cette solution s'accompagne également d'inconvénients. En effet, dans le cas d'une utilisation soutenue de la machine une quantité d'eau chaude significative est injectée dans le réservoir ce qui tend à augmenter progressivement la température de l'eau du réservoir. Cette augmentation de température peut engendrer une prolifération microbienne rendant l'eau du réservoir impropre à la consommation.

La présente invention vise à limiter au moins certains des inconvénients accompagnant les solutions précitées.

Pour atteindre cet objectif, il est prévu un circuit hydraulique pour machine de préparation de boissons comme défini dans la revendication 1.

Ainsi, la portion de fluide évacuée lors de la dépressurisation ne subit pas d'élévation de température. Par conséquent, cette portion de fluide peut être stockée sans engendrer une élévation de la température du récipient de stockage et une prolifération microbienne à l'intérieur de ce dernier.

Le circuit selon l'invention pourra en outre présenter au moins facultativement l'une quelconque des caractéristiques suivantes :
- la portion d'eau est évacuée en direction d'un réservoir destiné à alimenter la pompe en fluide,
- le circuit hydraulique comprend une chambre d'entrée définissant un volume apte à contenir la portion fluide,
- la chambre d'entrée est disposée entre la pompe et la chaudière,
- la chambre d'entrée est en communication fluidique avec le réservoir,
- le circuit hydraulique comporte une vanne dont l'ouverture et la fermeture permettent respectivement d'autoriser et d'empêcher la communication fluidique entre la chambre d'entrée et le réservoir,
- le circuit hydraulique est agencé de manière à ce que la fermeture de la vanne et la mise sous pression du fluide contenu dans ledit tronçon soient synchronisées.
- le volume défini par la chambre d'entrée est sensiblement égal au volume occupé par la portion d'eau,

En outre, il est prévu selon l'invention une machine à café comportant un circuit hydraulique selon la revendication 1.

On prévoit également selon l'invention un procédé de dépressurisation comme défini dans la revendication 7.

D'autres caractéristiques, buts et avantages de la présente invention apparaîtront à la lecture de la description détaillée qui va suivre et au regard du dessin annexé donné à titre d'exemple non limitatif.

### Premier exemple de réalisation

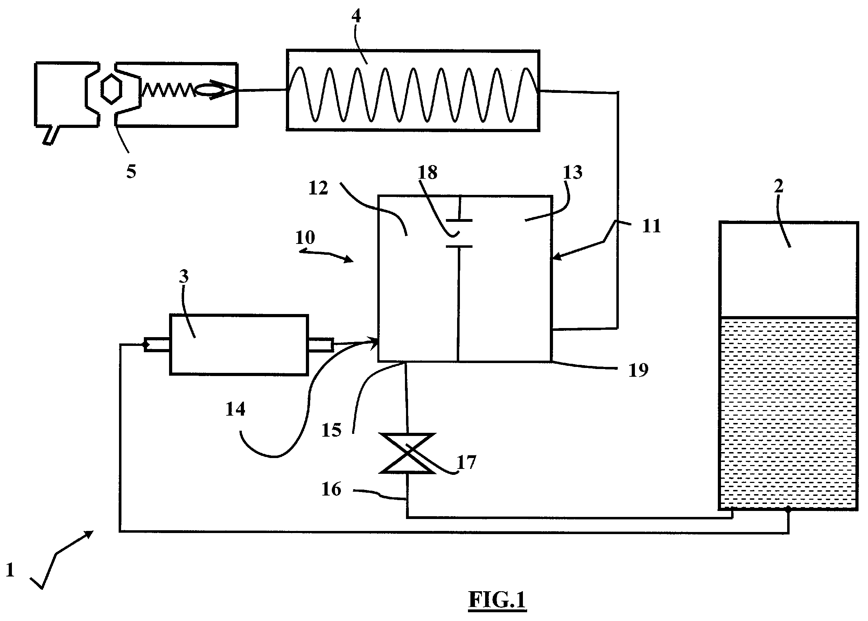

La figure 1 représente un schéma d'un circuit hydraulique. L'exemple qui suit est décrit en référence à cette figure.

Cet exemple décrit un circuit hydraulique 1 permettant une infusion de café sous pression d'eau. L'invention s'étend bien entendu à l'ensemble des produits à infuser sans se limiter au café et à l'ensemble des fluides de préparation de boissons sans se limiter à l'eau.

Le circuit comprend un réservoir 2, une pompe 3, une chaudière 4 et une chambre d'infusion 5 successivement disposés depuis l'amont vers l'aval. Dans la présente demande l'amont et l'aval sont définis par rapport au sens de l'écoulement de l'eau dans le circuit lors d'une phase d'infusion.

Ainsi le réservoir 2 est en communication fluidique avec la pompe 3. Il est destiné à stocker l'eau alimentant cette dernière. La pompe 3 est disposée entre le réservoir 2 et la chaudière 4. La chaudière 4 est en communication fluidique avec la pompe 3 en amont et la chambre d'infusion 5 en aval. La pompe 3 permet d'alimenter en eau sous pression le tronçon de circuit compris entre la pompe 3 et la chambre d'infusion 5. Ainsi, la pompe 3 et la chaudière 4 permettent d'approvisionner la chambre d'infusion 5 avec de l'eau à pression et température requises.

En outre le circuit comprend un dispositif de dépressurisation 10. Le dispositif comporte un refroidisseur 11 faisant office de réservoir intermédiaire. Il est disposé entre la pompe 3 et la chaudière 4. Le refroidisseur 11 comprend une chambre d'entrée 12 et une chambre de sortie 13 disposées en communication fluidique mutuelle par l'intermédiaire d'un passage. Avantageusement, ce passage est pratiqué dans une paroi commune aux deux chambres, 12, 13. Le refroidisseur 11 forme ainsi un élément monobloc simple à fabriquer et à incorporer dans le circuit hydraulique 1.

La chambre d'entrée 12 présente une connexion d'entrée 14 reliée à un conduit permettant une communication fluidique entre la sortie de la pompe 3 et la chambre d'entrée 12. La chambre d'entrée 12 comporte également une connexion de dépressurisation 15 reliée à un conduit de dépressurisation 16 permettant une communication fluidique entre la chambre d'entrée 12 et le réservoir 2. Le circuit comporte également une vanne disposée sur le conduit de dépressurisation 16. Avantageusement cette vanne est une électrovanne 17.

La fermeture et l'ouverture de l'électrovanne 17 permettent respectivement d'empêcher et d'autoriser la communication fluidique entre la chambre d'entrée 12 et le réservoir 2.

La chambre de sortie 13 comporte une connexion de sortie 19 reliée à un conduit permettant une communication fluidique entre la chambre de sortie 13 et l'entrée de la chaudière 4.

Le fonctionnement de ce circuit va maintenant être détaillé.

Lorsque l'utilisateur désire préparer une boisson, du café, par exemple moulu ou conditionné dans une dosette est introduit dans la chambre d'infusion 5. Cette dernière est ensuite fermée hermétiquement et la pompe 3 est enclenchée. La pompe 3 injecte de l'eau provenant du réservoir 2 dans le tronçon du circuit compris entre la pompe 3 et la chambre d'infusion 5.

L'eau provenant du réservoir 2 traverse alors successivement la pompe 3, la chambre d'entrée 12, la chambre de sortie 13, la chaudière 4 puis parvient enfin à la chambre d'infusion 5. L'enclenchement de la pompe 3 et par conséquent l'injection d'eau sous pression dans le tronçon sont synchronisés avec la fermeture de l'électrovanne 17.

Ainsi tout au long de l'infusion sous pression l'électrovanne 17 demeure fermée et l'eau située dans la chambre d'entrée 12 ne peut pas s'échapper par la connexion de dépressurisation 15. Avant l'ouverture de cette dernière, l'eau contenue dans le tronçon est alors sous pression. Cette pression, dans le cadre de la préparation de café de type Expresso est de l'ordre de 8 à 16 bars.

Lorsque l'infusion est achevée, la production de café est stoppée et la chambre d'infusion 5 doit être ouverte. Le dispositif de dépressurisation 10 permet de réduire la pression de l'eau contenue dans le tronçon et d'amener cette dernière à une pression proche de la pression atmosphérique.

Après avoir réalisé une boisson, l'arrêt de la pompe 3 et l'ouverture de l'électrovanne 17 sont simultanément actionnés. Cet actionnement est soit réalisé de manière manuelle par un opérateur qui agit sur une touche ou sur une manette de commande, soit réalisé de manière automatique par le circuit hydraulique 1 lui-même lorsqu'une certaine quantité d'eau a permis d'infuser suffisamment le café.

L'ouverture de l'électrovanne 17 autorise l'évacuation à travers la connexion de dépressurisation 15 du fluide préalablement maintenu sous pression dans le tronçon.

L'ouverture provoque ainsi une dépressurisation du tronçon. La pression de l'eau contenue dans le tronçon baisse jusqu'à atteindre un équilibre de pression avec l'eau retenue dans le réservoir 2. Pour rappel, la surface libre de l'eau retenue dans le réservoir 2 est à la pression atmosphérique.

L'eau évacuée depuis le tronçon vers le conduit de dépressurisation 16 jusqu'à l'obtention d'un équilibre de pression est désignée par la suite portion d'eau et occupe un volume sensiblement constant lors de chacun des cycles de préparation de café.

Le volume intérieur de la chambre d'entrée 12 est sensiblement égal au volume de la portion d'eau. Ainsi, lors de la dépressurisation sensiblement l'ensemble de l'eau contenue dans la chambre d'entrée 12 est évacué à travers le conduit de dépressurisation 16 vers le réservoir 2.

Or, la chambre d'entrée 12 étant alimentée par la pompe 3, l'eau qu'elle contient ne séjourne pas dans la chaudière 4 lors de l'infusion. Par conséquent, seule une portion d'eau qui n'a pas été au contact de la chaudière est évacuée hors du tronçon. Cette portion d'eau est évacuée vers le réservoir 2 et n'a pas subi d'élévation de température.

Le circuit hydraulique 1 permet ainsi de récupérer au niveau du réservoir 2 l'eau rejetée lors de la dépressurisation hors du tronçon, sans pour autant entraîner une élévation de la température du réservoir 2.

Ainsi l'invention permet de se passer d'une bassinelle et des inconvénients intrinsèques à cette dernière. Elle facilite par conséquent l'entretien de la machine à café, elle limite considérablement l'apparition des effets désagréables causés par la stagnation d'eau, et permet d'éviter toute consommation d'eau en dehors de la quantité nécessaire à l'infusion du café.

Elle permet également de maintenir le réservoir 2 à température ambiante. Ainsi, l'eau du réservoir 2 ne fait l'objet d'aucune prolifération microbienne. Par ailleurs l'eau du réservoir 2 conserve une température suffisamment basse pour préserver l'intégrité du circuit hydraulique 1, et ceci même après de nombreux cycles de fonctionnement effectués en continu. En particulier, la température de l'eau fournie à la pompe 3 n'est pas susceptible de dégrader les joints de cette dernière. La température de l'eau fournie à la pompe 3 permet également d'assurer un bon refroidissement des organes de la pompe 3 tels que la bobine. La pompe 3 étant suffisamment refroidie, ceci permet de limiter les risques de dérive du circuit hydraulique 1.

Par ailleurs, le volume intérieur de la chambre de sortie 13 est sensiblement égal au volume de la portion d'eau rejetée lors de la dépressurisation. Ainsi lors de l'ouverture de l'électrovanne 17, de l'eau contenue dans la chaudière 4 reflue vers la chambre de sortie 13 et repousse l'eau contenue dans cette dernière dans la chambre d'entrée 12. L'eau contenue lors de la mise sous pression dans la chambre d'entrée 12 est alors chassée par l'eau en provenance de la chambre de sortie 13 et s'échappe par la connexion de dépressurisation 15 en direction du réservoir 2.

Par conséquent, et, de manière particulièrement avantageuse, la chambre de sortie 13 fait office de réservoir intermédiaire entre la chambre de d'entrée 12 et la chaudière 4. Elle permet ainsi d'isoler l'eau qui est contenue dans la chambre d'entrée 12 pendant le maintien sous pression et qui est destinée à être évacuée vers le réservoir 2 lors de la dépressurisation, de l'eau qui est contenue dans chaudière 4 pendant le maintien sous pression et qui est destinée à revenir dans le refroidisseur 11 lors de la dépressurisation. La chambre de sortie 13 empêche alors qu'une partie de l'eau chaude en provenance de la chaudière 4 entre au contact de l'eau contenue dans la chambre d'entrée 12 et destinée à être évacuée vers le réservoir 2.

Ainsi, seule l'eau à température ambiante présente dans la chambre de sortie 13 lors du maintien sous pression est susceptible d'être mélangée à de l'eau chaude en provenance de la chaudière 4 lors de la dépressurisation. Or, cette eau à température ambiante éventuellement mélangée à un peu d'eau chaude reste confinée dans la chambre d'entrée 12 sans être évacuée vers le réservoir 2 lors de la dépressurisation.

La chambre de sortie 13 fait donc office de chambre tampon entre la chaudière 4 et la chambre d'entrée 12 et améliore significativement les performances du circuit hydraulique.

Lors du cycle suivant de préparation de boisson, l'électrovanne 17 se ferme, la pompe 3 remplie la chambre d'entrée12 avec de l'eau à température ambiante, sous pression et provenant du réservoir 2 et chasse l'eau contenue dans la chambre d'entrée 12 vers la chambre de sortie 13. L'eau chaude contenue dans la chambre de sortie 13 retourne alors dans la chaudière 4.

Lorsque deux cycles de préparation de boissons sont effectués de manière rapprochée dans le temps, la chaudière 4 accueille ainsi de l'eau déjà chaude ce qui permet de réduire le temps de chauffe ainsi que la consommation électrique de la chaudière 4.

Exemple de réalisation de l'invention

Dans un exemple de réalisation de l'invention, le refroidisseur 11 comporte seulement une chambre d'entrée 12 et ne comporte pas de chambre de sortie 13. La chambre d'entrée 12 est alors en communication fluidique avec la sortie de la pompe 3, avec le conduit de dépressurisation 16 et avec l'entrée de la chaudière 4.

Comme dans l'exemple précédent, le volume intérieur de la chambre d'entrée 12 est sensiblement égal au volume de la portion d'eau rejetée lors de la dépressurisation. Ainsi, lors de l'ouverture de l'électrovanne 17 seule l'eau contenue dans la chambre d'entrée 12 lors du maintien sous pression est évacuée vers le réservoir 2 lors de la dépressurisation. Par conséquent, lors de la dépressurisation seule une portion de fluide qui n'a pas été au contact de la chaudière 4 lors de la mise sous pression du fluide est évacuée hors du tronçon.

L'eau ayant séjournée dans la chaudière 4 s'accumule elle dans la chambre d'entrée 12 et sera à nouveau chassée vers la chaudière 4 lors de la mise sous pression suivante sans pour autant d'être évacuée vers le réservoir 2 l'électrovanne étant alors fermée.

Cet exemple de réalisation de l'invention permet de se passer de bassinelle. Par ailleurs, il s'oppose à une élévation de température de la portion d'eau rejetée dans le réservoir 2 et contribue ainsi à maintenir l'eau de ce dernier à température ambiante.

On pourra prévoir d'adapter la chambre d'entrée 12 dans le but de limiter les éventuelles échanges de chaleur entre l'eau à température ambiante et l'eau chaude, lorsque cette dernière, en provenance de la chaudière, pénètre dans le refroidisseur et chasse l'eau à température ambiante qui s'évacue vers le réservoir 2. Cette adaptation de la chambre d'entrée pourra notamment consister à prévoir des chicanes dans la chambre d'entrée 12 et/ou une disposition relative appropriée entre la connexion de dépressurisation 15 et la connexion de sortie 19, et/ou une forme particulière de l'intérieur de la chambre d'entrée 12.

La présente invention n'est pas limitée aux modes de réalisation décrits ci-dessus mais s'étend à tout mode de réalisation conforme à la définition selon la revendication 1.

Notamment on pourra prévoir, sans sortir de l'enseignement de l'invention, de faire varier les formes de chacune des deux chambres. On pourra également prévoir des chicanes à l'intérieur de chacune des chambres. On peut également prévoir de modifier le positionnement relatif de chacune des chambres et par exemple de les espacer l'une de l'autre.

### REFERENCES

1. Circuit hydraulique
2. Réservoir
3. Pompe
4. Chaudière
5. Chambre d'infusion
10. Dispositif de dépressurisation
11. Refroidisseur
12. Chambre d'entrée
13. Chambre de sortie
14. Connexion d'entrée
15. Connexion de dépressurisation
16. Conduit de dépressurisation
17. Electrovanne
18. Passage
19. Connexion de sortie

## Revendications

1. Circuit hydraulique (1) pour machine de préparation de boissons comportant une pompe (3) alimentée par un réservoir (2), une chaudière (4), une chambre d'infusion (5), la pompe (3) étant agencée de manière à mettre sous pression un fluide contenu dans un tronçon du circuit compris entre la pompe (3) et la chambre d'infusion (5) et comprenant la chaudière (4), le circuit comprenant un dispositif de dépressurisation (10) destiné à permettre l'évacuation d'une portion du fluide hors dudit tronçon et vers le réservoir (2) d'alimentation de la pompe (3) lors de la dépressurisation du fluide, **caractérisé en ce que** le dispositif de dépressurisation (10) comprend :
- un refroidisseur (11) qui comprend seulement une chambre d'entrée (12) et ne comporte pas de chambre de sortie (13), la chambre d'entrée (12) étant disposée dans le circuit hydraulique (1) entre la pompe (3) et la chaudière (4),
- un conduit de dépressurisation (16) permettant une communication fluidique entre la chambre d'entrée (12) et le réservoir (2) et
- une électrovanne (17) disposée sur le conduit de dépressurisation (16),
la chambre d'entrée (12) étant en communication fluidique avec une sortie de la pompe 3, avec le conduit de dépressurisation (16) et avec l'entrée de la chaudière 4,
le circuit hydraulique (1) étant configuré pour que, lors de la dépressurisation du fluide, l'eau ayant séjournée dans la chaudière (4) s'accumule dans la chambre d'entrée (12) et soit à nouveau chassée vers la chaudière (4) lors de la mise sous pression suivante sans pour autant d'être évacuée vers le réservoir (2) l'électrovanne (17) étant alors fermée, de manière à ce que seule une portion de fluide qui n'a pas été au contact de la chaudière (4) lors de la mise sous pression du fluide est évacuée hors du tronçon vers le réservoir (2) d'alimentation de la pompe (3), la chambre d'entrée (12) définissant un volume apte à contenir la portion de fluide.

2. Circuit selon la revendication 1, **caractérisé en ce que** la portion de fluide est évacuée en direction d'un réservoir (2) destiné à alimenter la pompe (3) en fluide.

3. Circuit selon la revendication 1, **caractérisé en ce que** la chambre d'entrée (12) est en communication fluidique avec le réservoir (2) et **en ce que** l'ouverture et la fermeture de l'électrovanne permettent respectivement d'autoriser et d'empêcher la communication fluidique entre la chambre d'entrée (12) et le réservoir (2).

4. Circuit selon la revendication 3, **caractérisé en ce qu'**il est agencé de manière à ce que la fermeture de l'électrovanne et la mise sous pression du fluide contenu dans ledit tronçon soient synchronisées.

5. Circuit selon l'une quelconque des revendications précédentes, **caractérisé en ce que** le volume défini par la chambre d'entrée (12) est sensiblement égal au volume occupé par la portion de fluide.

6. Machine à café comportant un circuit hydraulique selon une quelconque des revendications précédentes.

7. Procédé de dépressurisation d'un circuit hydraulique (1) selon l'une quelconque des revendications 1 à 5 dans lequel lors de la dépressurisation l'eau ayant séjournée dans la chaudière (4) s'accumule dans la chambre d'entrée (12) et est à nouveau chassée vers la chaudière (4) lors de la mise sous pression suivante sans pour autant d'être évacuée vers le réservoir (2) l'électrovanne (17) étant alors fermée, de manière à ce que seule une portion de fluide qui n'a pas été au contact de la chaudière (4) lors de la mise sous pression du fluide soit évacuée hors du tronçon.

## Patentansprüche

1. Hydraulikkreislauf (1) für eine Maschine zur Zubereitung von Getränken, umfassend eine Pumpe (3), die von einem Tank (2) gespeist wird, einen Erhitzer (4), eine Brühkammer (5), wobei die Pumpe (3) angeordnet ist, sodass ein Fluid druckbeaufschlagt wird, das in einem Abschnitt des Kreislaufs enthalten ist, der zwischen der Pumpe (3) und der Brühkammer (5) liegt und den Erhitzer (4) umfasst, wobei der Kreislauf eine Vorrichtung zur Druckentlastung (10) umfasst, die dazu bestimmt ist, die Ableitung eines Teils des Fluids aus dem Abschnitt und in den Tank (2) für die Speisung der Pumpe (3) bei der Druckentlastung des Fluids zu ermöglichen, **dadurch gekennzeichnet, dass** die Vorrichtung zur Druckentlastung (10) Folgendes umfasst:
- einen Kühler (11), der nur eine Eintrittskammer (12) umfasst und keine Austrittskammer (13) umfasst, wobei die Eintrittskammer (12) im Hydraulikkreislauf (1) zwischen der Pumpe (3) und dem Erhitzer (4) angeordnet ist,
- eine Druckentlastungsleitung (16), die eine fluide Verbindung zwischen der Eintrittskammer (12) und dem Tank (2) ermöglicht, und
- ein Magnetventil (17), das an der Druckentlastungsleitung (16) angeordnet ist,
wobei die Eintrittskammer (12) in fluider Verbindung mit einem Ausgang der Pumpe (3), mit der Druckentlastungsleitung (16) und mit dem Eingang des Erhitzers (4) ist,
wobei der Hydraulikkreislauf (1) so ausgelegt ist, dass sich bei der Druckentlastung des Fluids das Wasser, das im Erhitzer (4) gespeichert wurde, in der Eintrittskammer (12) ansammelt und bei der folgenden Druckbeaufschlagung wieder in den Erhitzer (4) gejagt wird, ohne dabei in den Tank (2) abgeleitet zu werden, wobei das Magnetventil (17) dann geschlossen ist, sodass nur ein Teil des Fluids, der bei der Druckbeaufschlagung des Fluids nicht mit dem Erhitzer (4) in Kontakt war, aus dem Abschnitt in den Tank (2) für die Speisung der Pumpe (3) abgeleitet wird, wobei die Eintrittskammer (12) ein Volumen definiert, das geeignet ist, den Teil des Fluids zu fassen.

2. Kreislauf nach Anspruch 1, **dadurch gekennzeichnet, dass** der Teil des Fluids in Richtung eines Tanks (2) abgeleitet wird, der dazu bestimmt ist, die Pumpe (3) mit Fluid zu speisen.

3. Kreislauf nach Anspruch 1, **dadurch gekennzeichnet, dass** die Eintrittskammer (12) in fluider Verbindung mit dem Tank (2) ist und dadurch, dass die Öffnung und die Schließung des Magnetventils es jeweils ermöglichen, die fluide Verbindung zwischen der Eintrittskammer (12) und dem Tank (2) zuzulassen und zu verhindern.

4. Kreislauf nach Anspruch 3, **dadurch gekennzeichnet, dass** er so angeordnet ist, dass die Schließung des Magnetventils und die Druckbeaufschlagung des Fluids, das im Abschnitt enthalten ist, synchronisiert ablaufen.

5. Kreislauf nach einem der vorhergehenden Ansprüche, **dadurch gekennzeichnet, dass** das Volumen, das von der Eintrittskammer (12) definiert wird, im Wesentlichen gleich ist wie das Volumen, das vom Teil des Fluids eingenommen wird.

6. Kaffeemaschine, umfassend einen Hydraulikkreislauf nach einem der vorhergehenden Ansprüche.

7. Verfahren zur Druckentlastung eines Hydraulikkreislaufs (1) nach einem der Ansprüche 1 bis 5, wobei sich bei der Druckentlastung das Wasser, das im Erhitzer (4) gespeichert wurde, in der Eintrittskammer (12) ansammelt und bei der folgenden Druckbeaufschlagung wieder in den Erhitzer (4) gejagt wird, ohne dabei in den Tank (2) abgeleitet zu werden, wobei das Magnetventil (17) dann geschlossen ist, sodass nur ein Teil des Fluids, der bei der Druckbeaufschlagung des Fluids nicht mit dem Erhitzer (4) in Kontakt war, aus dem Abschnitt abgeleitet wird.

## Claims

1. Hydraulic circuit (1) for a machine for preparing beverages comprising a pump (3) supplied by a tank (2), a boiler (4), an infusion chamber (5), with the pump (3) being arranged in such a way as to pressurise a fluid contained in a section of the circuit between the pump (3) and the infusion chamber (5) and comprising the boiler (4), with the circuit comprising a depressurisation device (10) for allowing the discharge of a portion of the fluid outside of said section and to the supply tank (2) of the pump (3) during the depressurisation of the fluid, **characterised in that** the depressurisation device (10) comprises:
- a cooler (11) which comprises only one inlet chamber (12) and does not comprise an outlet chamber (13), with the inlet chamber (12) being arranged in the hydraulic circuit (1) between the pump (3) and the boiler (4),
- a depressurisation duct (16) allowing for fluidic communication between the inlet chamber (12) and the tank (2) and
- a solenoid valve (17) arranged on the depressurisation duct (16),
with the inlet chamber (12) being in fluidic communication with an outlet of the pump 3, with the depressurisation duct (16) and with the inlet of the boiler 4,
with the hydraulic circuit (1) being configured so that, during the depressurisation of the fluid, the water that has stayed in the boiler (4) accumulates in the inlet chamber (12) and is again flushed to the boiler (4) during the following pressurisation without however being discharged to the tank (2) with the solenoid valve (17) then being closed, in such a way that only a portion of the fluid that was not in contact with the boiler (4) during the pressurisation of the fluid is discharged out of the section to the supply tank (2) of the pump (3), with the inlet chamber (12) defining a volume able to contain the portion of fluid.

2. Circuit according to claim 1, **characterised in that** the portion of fluid is discharged in the direction of a tank (2) intended to supply the pump (3) with fluid.

3. Circuit according to claim 1, **characterised in that** the inlet chamber (12) is in fluidic communication with the tank (2) and **in that** the opening and the closing of the solenoid valve respectively make it possible to authorise and to prevent the fluidic communication between the inlet chamber (12) and the tank (2).

4. Circuit according to claim 3, **characterised in that** it is arranged in such a way that the closing of the solenoid valve and the pressurisation of the fluid contained in said section are synchronised.

5. Circuit as claimed in any preceding claim, **characterised in that** the volume defined by the inlet chamber (12) is substantially equal to the volume occupied by the portion of fluid.

6. Coffee machine comprising a hydraulic circuit according to any of the preceding claims.

7. Method for depressurising a hydraulic circuit (1) according to any of claims 1 to 5 wherein during the depressurisation the water that has stayed in the boiler (4) accumulates in the inlet chamber (12) and is again flushed to the boiler (4) during the following pressurisation without however being discharged to the tank (2) with the solenoid valve (17) then being closed, in such a way that only a portion of fluid that was not in contact with the boiler (4) during the pressurisation of the fluid is discharged out of the section.
